Europäisches Patentamt

European Patent Office

Office européen des brevets

(19)

(11) Numéro de publication : **0 334 411 B1**

(12) **FASCICULE DE BREVET EUROPEEN**

(45) Date de publication du fascicule du brevet :
15.07.92 Bulletin 92/29

(51) Int. Cl.⁵ : **C08F 4/649, C08F 10/00**

(21) Numéro de dépôt : **89200469.8**

(22) Date de dépôt : **27.02.89**

(54) **Procédé pour la polymérisation stéréospécifique des alpha-oléfines et système catalytique utilisable pour cette polymérisation.**

(30) Priorité : **09.03.88 FR 8803160**

(43) Date de publication de la demande :
**27.09.89 Bulletin 89/39**

(45) Mention de la délivrance du brevet :
**15.07.92 Bulletin 92/29**

(84) Etats contractants désignés :
**AT BE CH DE ES FR GB GR IT LI NL SE**

(56) Documents cités :
**EP-A- 0 261 727**
**FR-A- 2 253 030**
**GB-A- 2 110 703**

(73) Titulaire : **SOLVAY**
**Rue du Prince Albert, 33**
**B-1050 Bruxelles (BE)**

(72) Inventeur : **Fiasse, Paul**
**Avenue de l'Université 67/11**
**B-1050 Bruxelles (BE)**

(74) Mandataire : **Husemann, Claude et al**
**SOLVAY Département de la Propriété**
**Industrielle 310, Rue de Ransbeek**
**B-1120 Bruxelles (BE)**

EP 0 334 411 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé pour la polymérisation stéréospécifique des alpha-oléfines, et un système catalytique utilisable pour cette polymérisation.

Il est connu de polymériser stéréospécifiquement les alpha-oléfines telles que le propylène au moyen d'un système catalytique comprenant un constituant solide à base de trichlorure de titane et un activateur constitué d'un composé organométallique tel qu'un chlorure d'alkylaluminium.

Dans le brevet BE-A-780758 (SOLVAY & Cie), on a décrit des complexes catalytiques solides superactifs à base de $TiCl_3$ de porosité interne élevée, permettant d'obtenir des polymères du propylène de très bonne stéréorégularité.

Ces complexes catalytiques solides sont uniques par les avantages extrêmement importants qu'ils procurent. Leur activité en polymérisation est tellement élevée que les résidus catalytiques subsistant dans la polyoléfine sont en si faible quantité qu'ils ne doivent plus être éliminés.

Leur stéréospécificité est telle que le polymère obtenu ne contient qu'une très faible proportion de fraction amorphe. Enfin, les particules de ces complexes catalytiques se présentant sous la forme de sphères régulières, le polymère obtenu se présente également sous la forme de particules sphériques régulières, de poids spécifique apparent élevé et de bonne coulabilité.

Les fabricants de polyoléfines demeurent toutefois désireux d'améliorer encore la productivité de leurs installations de polymérisation, cette amélioration de productivité se traduisant en pratique par une diminution du temps de séjour du polymère dans les installations de polymérisation ou par une réduction du volume de ces dernières.

Un moyen simple d'améliorer la productivité consiste à effectuer la polymérisation à température plus élevée. L'augmentation de la température de polymérisation a toutefois pour conséquence malheureuse une diminution de la stéréospécificité des complexes catalytiques.

On a tenté de remédier à cet inconvénient en effectuant la polymérisation du propylène en présence de systèmes catalytiques comprenant les complexes catalytiques solides superactifs mentionnés plus haut, modifiés par l'introduction, dans le milieu de polymérisation, d'un terconstituant qui est généralement un composé électrodonneur (base de Lewis). Un très grand nombre de composés électrodonneurs de natures diverses ont déjà été proposés à titre de terconstituants susceptibles d'augmenter la stéréospécificité de ces systèmes catalytiques (voir par exemple le brevet BE-A-822941 (ICI)). L'amélioration de stéréospécificité obtenue grâce à l'introduction de pareils composés électrodonneurs dans le milieu de polymérisation n'est toutefois notable que lorsque la quantité de composé électrodonneur est relativement élevée (le poids de composé électrodonneur est généralement au moins égal au poids de complexe catalytiques solide présent dans le milieu et souvent très supérieur). On constate alors des effets secondaires néfastes tels une diminution inacceptable de la productivité catalytique et l'apparition de colorations parasites dans le polymère recueilli.

On a maintenant trouvé que la combinaison de certains solides catalytiques, à base de trichlorure de titane complexé, avec un activateur organométallique et avec un terconstituant choisi parmi certaines classes de composés électrodonneurs permet d'obtenir des systèmes catalytiques de stéréospécificité améliorée sans diminution concomitante inacceptable de la productivité catalytique.

La présente invention concerne dès lors un procédé pour la polymérisation des alpha-oléfines effectué en présence d'un système catalytique comprenant :

(1) un solide à base de trichlorure de titane complexé,

(2) un composé organométallique de métaux des groupes IA, IIA, IIB et IIIB du Tableau Périodique,

(3) un composé organique électrodonneur.

Le rapport molaire entre le composé électrodonneur (3) et le composé organométallique (2) étant compris entre 0,005 et 1 et le solide (1) à base de trichlorure de titane complexé ayant été préactivé par mise en contact avec un préactivateur comprenant le produit de la réaction d'un composé organoaluminique (a) et d'un composé (b) choisi parmi les composés hydroxyaromatiques dont le groupe hydroxyle est stériquement bloqué.

Le solide (1) à base de trichlorure de titane complexé préactivé utilisable dans le système catalytique selon l'invention (dénommé ci-après solide (1) préactivé) résulte de la préactivation, décrite plus loin, d'un précurseur (p) à base de trichlorure de titane complexé, qui peut être obtenu par n'importe quel procédé connu. On préfère généralement utiliser un précurseur (p) obtenu par un procédé impliquant une réduction initiale d'un composé du titane choisi parmi les tétrahalogénures, les tétrahydrocarbyloxydes et leurs mélanges. A titre d'exemples de tétrahalogénures de titane, on peut citer les tétraiodure, tétrabromure et tétrachlorure. A titre d'exemples de tétrahydrocarbyloxydes de titane, on peut citer les tétraalkoxydes tels que les tétraméthoxy-, tétraisopropoxy- et tétra- n-butoxytitanes; les tétraaryloxydes, tels que les tétraphénoxy-, tétracrésoxy- et tétranaphtoxytitanes par exemple.

Parmi les composés du titane mentionnés ci-dessus, on préfère les tétrahalogénures de titane et, parmi ces derniers, le tétrachlorure de titane.

La réduction peut être opérée à l'intervention d'hydrogène ou de métaux tels que le magnésium et, de préférence, l'aluminium, en particulier lorsque le composé du titane est un tétrahalogénure de titane. On préfère toutefois effectuer la réduction du composé du titane à l'intervention d'un réducteur organométallique, qui peut être par exemple un réducteur organomagnésien.

Les meilleurs résultats sont obtenus lorsque l'on opère la réduction du composé du titane à l'intervention de réducteurs organoaluminiques (r).

Les réducteurs organoaluminiques (r) utilisables de préférence sont les composés qui contiennent au moins un radical hydrocarboné fixé directement sur l'atome d'aluminium. Des exemples de composés de ce type sont les mono-, di- et trialkylaluminiums dont les radicaux alkyles contiennent de 1 à 12, et de préférence de 1 à 6 atomes de carbone, tels le triéthylaluminium, les isoprénylaluminiums, l'hydrure de diisobutylaluminium et l'éthoxydiéthylaluminium. Avec les composés de ce type, les meilleurs résultats sont obtenus avec les chlorures d'alkylaluminium, en particulier avec le chlorure de diéthylaluminium et avec le sesquichlorure d'éthylaluminium.

Pour obtenir les précurseurs (p) des solides (1) préactivés des systèmes catalytiques utilisables selon l'invention, on soumet les solides réduits mentionnés ci-dessus à un traitement au moyen d'au moins un agent complexant qui est choisi en général parmi les composés organiques comprenant un ou plusieurs atomes ou groupements présentant une ou plusieurs paires d'électrons libres susceptibles d'assurer la coordination avec les atomes de titane ou d'aluminium présents dans les composés du titane ou d'aluminium (r). De préférence, l'agent complexant est choisi dans la famille des éthers aliphatiques, et plus particulièrement parmi ceux dont les radicaux aliphatiques comprennent de 2 à 8 atomes de carbone, de préférence 4 à 6 atomes de carbone. Un exemple typique d'éther aliphatique donnant de très bons résultats est l'éther diisoamylique.

Ces traitements au moyen d'agents complexants, propres à stabiliser ou à améliorer la productivité et/ou la stéréospécificité des solides catalytiques sont bien connus et ont été amplement décrits dans la littérature.

Ainsi, le traitement au moyen de l'agent complexant peut consister en un broyage du solide réduit en présence de l'agent complexant. Il peut consister en un traitement thermique du solide réduit en présence de l'agent complexant. Il peut aussi consister en des lavages extractifs du solide réduit, en présence de solvants mixtes comprenant un composé hydrocarboné liquide et un solvant auxiliaire polaire, par exemple un éther. On peut aussi effectuer la réduction du composé de titane, en particulier du tétrachlorure, avec le réducteur organoaluminique (r), en présence de l'agent complexant, par exemple en ajoutant au tétrachlorure de titane une solution hydrocarbonée du produit de la réaction de l'agent complexant avec ce réducteur, et soumettre ensuite le solide réduit ainsi obtenu à un traitement thermique en l'absence d'agent complexant ou en présence d'une nouvelle quantité d'agent complexant, identique ou différent du précédent. On peut aussi effectuer le traitement au moyen de l'agent complexant avec une quantité de ce dernier suffisante pour former une solution homogène de solide à base de trichlorure de titane et reprécipiter par chauffage le solide ainsi dissous.

Pour la préparation du précurseur (p), le traitement au moyen de l'agent complexant peut être combiné avec ou suivi d'un traitement d'activation. Ces traitements d'activation sont également bien connus et ont également été décrits dans la littérature. Ils sont effectués en général au moyen d'au moins un agent choisi parmi les composés halogénés inorganiques, les composés halogénés organiques, les composés interhalogénés et les halogènes. Parmi ces agents, on peut citer :

– à titre de composés halogénés inorganiques, les halogénures de métaux et de non métaux, tels que les halogénures de titane et de silicium par exemple;

– à titre de composés halogénés organiques, les hydrocarbures halogénés tels que les alkanes halogénés et les tétrahalogénures de carbone par exemple;

– à titre de composés interhalogénés, les chlorure et bromure d'iode par exemple;

– à titre d'halogène, le chlore, le brome et l'iode.

Des exemples d'agents convenant très bien pour le traitement d'activation sont le tétrachlorure de titane, le tétrachlorure de silicium, l'iodobutane, le monochloréthane, l'hexachloréthane, le chlorméthylbenzène, le tétrachlorure de carbone, le chlorure d'iode et l'iode. Les meilleurs résultats ont été obtenus avec le tétrachlorure de titane.

La forme physique sous laquelle se trouvent les agents complexants et les agents utilisés pour l'éventuel traitement d'activation n'est pas critique pour la préparation du précurseur. Ces agents peuvent être mis en oeuvre sous forme gazeuse, ou sous forme liquide, cette dernière étant la forme la plus usuelle sous laquelle ils se présentent dans les conditions habituelles de température et de pression. On peut aussi effectuer le traitement au moyen de l'agent complexant et l'éventuel traitement d'activation en présence d'un diluant hydrocarboné inerte, généralement choisi parmi les hydrocarbures aliphatiques, cycloaliphatiques et aromatiques liquides, tels que les alkanes et isoalkanes liquides et le benzène.

Des détails relatifs aux conditions opératoires des traitements de complexation et d'activation les plus courants peuvent être trouvés notamment dans le brevet BE-A-864708 (SUMITOMO CHEMICAL COMPANY LTD), dans le brevet US-A-4295991 (EXXON RESEARCH AND ENGINEERING CO) et dans les documents cités dans ce dernier.

A un moment quelconque de sa préparation, après l'étape de réduction ou de complexation, ou après l'éventuelle étape d'activation, mais de préférence après l'étape de réduction, le précurseur (p) peut être soumis à un traitement visant à diminuer la friabilité de ses particules constitutives. Ce traitement, appelé "prépolymérisation", consiste à mettre le solide en contact avec une alpha- monooléfine inférieure, telle que l'éthylène ou le propylène, dans des conditions polymérisantes de manière à obtenir un solide contenant en général entre 5 et 500 % en poids environ d'alpha-monooléfine "prépolymérisée". Cette "prépolymérisation" peut s'effectuer avantageusement au sein d'une suspension du solide dans le diluant hydrocarboné inerte tel que défini plus haut pendant une durée suffisante pour obtenir la quantité souhaitée d'alpha-monooléfine prépolymérisée sur le solide. Le précurseur (p) obtenu selon cette variante est moins friable et permet d'obtenir des polymères de bonne morphologie même lorsqu'on polymérise à température relativement élevée.

Selon l'invention, le précurseur (p) est, à un moment quelconque de sa préparation mais, de préférence, à la fin de cette dernière, mis en contact avec un préactivateur comprenant le produit de la réaction d'un composé organoaluminique (a) et d'un composé (b) choisi parmi les composés hydroxyaromatiques dont le groupe hydroxyle est stériquement bloqué. Cette mise en contact du préactivateur avec le précuseur (p) s'effectue généralement en mettant le second, de préférence séparé du milieu dans lequel il a été préparé et lavé par un diluant hydrocarboné inerte tel que défini plus haut, en contact avec le premier. Le composé organoaluminique (a) utilisé pour préparer le préactivateur est choisi de préférence parmi les trialkylaluminiums et les chlorures d'alkylaluminium. Parmi ces composés, les meilleurs résultats ont été obtenus avec le triéthylaluminium et surtout avec le chlorure de diéthylaluminium. Le composé hydroxyaromatique (b) utilisé pour préparer le préactivateur est choisi de préférence parmi les phénols di-tert-alkylés dans les positions ortho par rapport aux groupes hydroxyles et les esters de l'acide 3-(3′,5′-di-tert-butyl-4′-hydroxyphényl)propionique. Parmi ces composés, les meilleurs résultats ont été obtenus avec le 3-(3′,5′-di-tert-butyl-4′-hydroxyphényl)propionate de n-octadécyle.

On trouvera d'autres détails en rapport avec la mise en contact du précurseur (p) avec le préactivateur défini ci-dessus, notamment avec la nature des composés organoaluminiques et hydroxyaromatiques, en rapport avec les conditions opératoires dans lesquelles on l'effectue et en rapport avec la texture du solide (1) préactivé obtenu, dans la demande de brevet français FR-A-2604439.

Une méthode de préparation préférée du précurseur (p) qui, préactivé comme indiqué ci-dessus, constitue le solide (1) entrant dans la composition du système catalytique utilisable selon l'invention, a été décrite dans le brevet BE-A-780758

(SOLVAY & Cie). Cette méthode comprend la réduction du tétrachlorure de titane au moyen d'un réducteur organoaluminique (r) qui, en l'occurrence, est de préférence un chlorure de dialkylaluminium dont les chaînes alkyles comprennent de 2 à 6 atomes de carbone, dans des conditions douces. Après un éventuel traitement thermique du solide réduit ainsi obtenu, on soumet ce dernier à un traitement au moyen d'un agent complexant tel que défini plus haut. Enfin, on opère un traitement au moyen de tétrachlorure de titane et on sépare le solide à base de trichlorure de titane complexé ainsi formé que l'on lave généralement au moyen d'un diluant hydrocarboné inerte tel que défini plus haut, choisi de préférence parmi les hydrocarbures aliphatiques liquides comprenant de 3 à 12 atomes de carbone et qui est d'ailleurs le diluant qui peut être utilisé tout au long de la préparation dudit solide.

La méthode de préparation préférée définie dans le paragraphe précédent conduit à des particules de précurseur (p) qui sont également décrites dans le brevet BE-A-780758. Ces particules sont sphériques et ont en général un diamètre compris entre 5 et 100 micromètres (microns) et le plus souvent entre 10 et 50 micromètres (microns). Elles sont constituées d'un aggloméré de microparticules également sphériques qui ont un diamètre compris entre 0,05 et 1 micromètre (micron), le plus souvent entre 0,1 et 0,3 micromètre (micron) et qui sont extrêmement poreuses. Il en résulte que les particules présentent une surface spécifique supérieure à 75 m$^2$/g et se situant le plus souvent entre 100 et 250 m$^2$/g et une porosité totale supérieure à 0,15 cm$^3$/g et comprise la plupart du temps entre 0,20 et 0,35 cm$^3$/g. La porosité interne des microparticules constitue la contribution la plus importante à cette porosité totale des particules, comme l'atteste la valeur élevée du volume poreux correspondant aux pores de moins de 200.10$^{-4}$ micromètres (microns) de diamètre, qui est supérieur à 0,11 cm$^3$/g et la plupart du temps compris entre 0,16 et 0,31 cm$^3$/g.

Les précurseurs (p) obtenus selon la méthode de préparation décrite dans le brevet BE-A-780758 en choisissant les conditions opératoires préférées répondent à la formule :

$$TiCl_3.(AlRCl_2)_x.C_y$$

où R est un radical alkyle comprenant de 2 à 6 atomes de carbone, C est un agent complexant tel que défini plus haut, x est un nombre quelconque inférieur à 0,20 et y un nombre quelconque supérieur à 0,009 et en général inférieur à 0,20.

A titre de variante de cette méthode de préparation, on peut citer celle, mentionnée plus haut, consistant à "prépolymériser" le solide réduit, après l'éventuel traitement thermique et avant le traitement au moyen de l'agent complexant, avec une alpha-monooléfine inférieure (propylène) dans des conditions polymérisantes. Cette "prépolymérisation" s'effectue au sein d'une suspension du solide réduit dans le diluant hydrocarboné inerte tel que défini plus haut, entre 20 et 80°C environ, pendant une durée comprise généralement entre 1 minute et 5 heures.

Quelle que soit la variante retenue pour la préparation du solide (1) préactivé, ce dernier est finalement séparé de son milieu de formation et généralement lavé ensuite au moyen d'un diluant hydrocarboné inerte de même nature que ceux à l'intervention desquels il a éventuellement été préparé.

Le solide (1) préactivé, faisant partie du système catalytique utilisable selon l'invention, séparé et lavé, peut être ensuite éventuellement séché de manière conventionnelle.

Après avoir été lavé et éventuellement séché, le solide (1) préactivé du système catalytique selon l'invention peut être immédiatement remis en contact avec un diluant hydrocarboné inerte tel que ceux qui ont été définis plus haut et qui sont aussi utilisables comme diluants dans la polymérisation en suspension. Le solide (1) préactivé selon l'invention peut aussi être soumis à un traitement de "prépolymérisation" tel que décrit plus haut en rapport avec le précurseur (p). Il peut être stocké dans un tel diluant ou sous forme sèche, de préférence à froid, pendant des périodes longues, sans perdre ses qualités.

Pour la polymérisation, le système catalytique selon l'invention contient, outre le solide (1) mentionné ci-dessus, un composé (2) qui est choisi parmi les composés organométalliques de métaux des groupes IA, IIA, IIB et IIIB du Tableau Périodique (version publiée dans Kirk-Othmer Encyclopedia of Chemical Technology, second complete revised edition, volume 8, 1965, page 94) et de préférence parmi les composés de formule :

$$A1 \quad R'_m \, Y_{3-m}$$

où

- R' est un radical hydrocarboné contenant de 1 à 18 atomes de carbone et de préférence de 1 à 12 atomes de carbone choisi parmi les radicaux alkyle, aryle, arylalkyle, alkylaryle et cycloalkyle; les meilleurs résultats sont obtenus lorsque R' est choisi parmi les radicaux alkyle contenant de 2 à 6 atomes de carbone;
- Y est un halogène choisi parmi le fluor, le chlore, le brome et l'iode; les meilleurs résultats sont obtenus lorsque Y est le chlore;
- m est un nombre quelconque tel que $0 < m \leq 3$ et de préférence tel que $1,5 \leq m \leq 2,5$; les meilleurs résultats sont obtenus lorsque m est égal à 2.

Le chlorure de diéthylaluminium (DEAC) assure une activité et une stéréospécificité maximales du système catalytique.

Outre le solide (1) préactivé et le composé organométallique (2), le système catalytique selon l'invention comprend un composé (3) qui est un composé organique électrodonneur.

On entend désigner par le terme "composé organique électrodonneur" n'importe quel composé organique comprenant au moins un atome ou groupement présentant au moins une paire d'électrons libres susceptible d'assurer la coordination avec le titane ou le métal du composé (2) et dont la molécule contient de 1 à 30 et de préférence de 2 à 20 atomes de carbone par atome ou groupement électrodonneur.

Les composés organiques électrodonneurs (3) sont généralement choisis parmi les composés organiques contenant de l'oxygène, les composés organiques contenant de l'azote, les composés organiques contenant du phosphore et les composés organiques contenant du soufre.

Il doit être bien entendu que les définitions ci-dessus englobent non seulement les composés ne comprenant qu'un seul atome électrodonneur choisi parmi l'oxygène, l'azote, le phosphore et le soufre ou un seul groupement électrodonneur contenant pareils atomes, mais également les composés comprenant plusieurs atomes ou groupements électrodonneurs, identiques ou différents, choisis parmi les atomes et groupements définis ci-dessus.

Quoique tous les composés organiques électrodonneurs définis ci-dessus confèrent aux systèmes catalytiques selon l'invention un compromis avantageux de stéréospécificité et d'activité catalytique, on préfère choisir le composé organique électrodonneur (3) parmi les composés contenant de l'oxygène, de l'azote et/ou du phosphore.

Des exemples de composés organiques électrodonneurs (3) contenant de l'oxygène utilisables selon l'invention sont les esters, les éthers, les cétones, les aldéhydes, les alcools, les acétals et les acides carboxyliques. Parmi ces composés, les esters et les éthers sont préférés.

A titre d'esters utilisables, on peut citer les esters d'acides mono- et polycarboxyliques, et notamment les esters d'acides carboxyliques aliphatiques, les esters d'acides carboxyliques oléfiniques, les esters d'acides carboxyliques alicycliques, les esters d'acides carboxyliques aromatiques et les esters cycliques dérivés d'hydroxyacides. Des exemples d'esters utilisables comprennent l'acétate de méthyle, l'acétate d'éthyle, l'acétate de phényle, le chloroacétate d'éthyle, le propionate de méthyle, le butyrate d'éthyle, le valérate d'éthyle, l'acrylate de méthyle, l'acrylate d'éthyle, le méthacrylate de méthyle, le benzoate d'éthyle, le benzoate de butyle, le toluate de méthyle, le toluate d'éthyle, l'anisate d'éthyle, le succinate de diéthyle, le succinate de dibutyle, le malonate de diéthyle, le malonate de dibutyle, le maléate de diméthyle, le maléate de dibutyle, l'itaconate de diéthyle, l'itaconate de dibutyle, le phtalate de monoéthyle, le phtalate de diméthyle, le phtalate d'éthylméthyle, le phtalate de diéthyle, le phtalate de di-n-propyle, le phtalate de diisobutyle, le phtalate de di-n-hexyle, le phtalate de di-n-octyle, le phtalate de diphényle, la β-propiolactone, la α-butyrolactone et l'ε-caprolactone.

Parmi tous les esters utilisables, on préfère les esters d'acides carboxyliques oléfiniques, tels que les acrylates et les méthacrylates et les esters d'acides carboxyliques aromatiques, tels que les benzoates, les toluates et les phtalates.

A titre d'éthers utilisables, on peut citer les monoéthers aliphatiques, les monoéthers oléfiniques, les monoéthers aromatiques, les monoéthers cycliques, les monoéthers dicycliques et les polyéthers. Des exemples d'éthers utilisables comprennent le diéthyléther, le di-n-propyléther, le diisopropyléther, le di-n-butyléther, le di-n-amyléther, le diisoamyléther, le di-n-hexyléther, le di-n-octyléther, le diisooctyléther, l'éthyl-n-butyléther, le n-amyl-n-butyléther, le divinyléther, le diallyléther, le butylallyléther, le dibutényléther, le dicyclohexyléther, le dibenzyléther, le diphényléther, l'éthylphényléther, le phénylbenzyléther, l'octénylbenzyléther, l'oxyde de propylène, le tétrahydrofurane, le 1,4-dioxane, le monométhyléther de l'éthylène-glycol, le diméthyléther de l'éthylène-glycol, le diméthyléther du tétraéthylène-glycol, le diéthyléther du tétraéthylène-glycol, le bis (2-méthoxyéthyl)éther et le diméthoxypropane.

Parmi tous les éthers utilisables, on enregistre des résultats avantageux avec les polyéthers, en particulier avec les di- et triéthers.

Des exemples de composés organiques électrodonneurs (3) contenant de l'azote sont les amines, les imines, les amides, les imides, les isocyanates et les nitriles. Parmi ces composés, les amines sont préférées. A titre d'amines utilisables, on peut citer les amines primaires aliphatiques, les amines primaires alicycliques, les amines primaires aromatiques, les amines primaires hétérocycliques, les amines secondaires aliphatiques, les amines secondaires alicycliques, les amines secondaires aromatiques, les amines secondaires hétérocycliques, les amines tertiaires aliphatiques, les amines tertiaires alicycliques, les amines tertiaires aromatiques, les bases tertiaires hétérocycliques, les dérivés aminés d'acides carboxyliques, les dérivés aminés d'alcools, les dérivés aminés d'aldéhydes, les dérivés aminés de quinones, les dérivés aminés de cétones et les dérivés aminés d'éthers. Des exemples d'amines utilisables comprennent l'éthylamine, la butylamine, l'éthylènediamine, la cyclohexylamine, le 4,4'-diaminodicyclohexylméthane, l'aniline, les o-,m-et p- toluidines, la benzylamine, la 4,4'-méthylène-dianiline, la p-phénylène-diamine, la m-xylylène diamine, la 2,6-diaminopyridine, la diéthylamine,la diphénylamine, la pipéridine, la pipérazine, la triéthylamine, la tributylamine, la N,N,N',N'-tétraméthylènediamine, la diméthylaniline, la triphénylamine, la pyridine et ses dérivés alkylés tels que les α-, β- et γ-picolines et la 2,4,6-triméthylpyridine par exemple, la quinoline, la glycine, la proline, la lysine, l'acide 3,5-diaminobenzoïque, les mono-, di- et triéthanolamines, la p-aminobenzaldéhyde, les α- et β- aminoanthraquinones, la 4,4'-diaminobenzophénone et le 4,4'-diaminodiphényléther.

Parmi toutes les amines utilisables, on préfère les amines et bases tertiaires, et particulièrement la pyridine et ses dérivés.

Des exemples de composés organiques électrodonneurs (3) contenant du phosphore sont les phosphites, les phosphonites, les phosphinites, les phosphates et les dérivés d'oxydes d'organophosphines. Parmi ces composés, les phosphites et les dérivés d'oxydes d'organophosphines, en particulier les phosphoramides, sont préférés.

A titre de phosphites utilisables, on peut citer les phosphites d'alkyle, les phosphites de cycloalkyle, les phosphites d'aryle, les phosphites d'arylalkyle et les phosphites d'alkylaryle.

Des exemples de phosphites utilisables comprennent le triméthylphosphite, le triéthylphosphite, le tributylphosphite, le diphénylcyclohexylphosphite, le triphénylphosphite, le tribenzylphosphite, le diphénylpropylphosphite.

Parmi tous les phosphites utilisables, on préfère les phosphites d'alkyle.

A titre de dérivés d'oxydes d'organophosphines utilisables, on peut citer les oxydes de trialkyl-, de triaryl-, de dialkoxyalkyl-, de diaryloxyalkyl- et de dialkylaminoalkoxyphosphines, ainsi que les phosphoramides N-alkyl-, N-cycloalkyl-, N-aryl-, N-arylalkyl-, N-alkylaryl- et N-alkylamino substituées.

Des exemples de dérivés d'oxydes d'organophosphines utilisables sont l'oxyde de diméthoxyéthylphosphine, l'oxyde de diéthoxyéthylphosphine, l'oxyde de dibutoxyéthylphosphine, l'oxyde de dibutoxypropylphosphine, l'oxyde de dibenzyloxyéthylphosphine, l'oxyde de triphénylphosphine et l'oxyde de bis(diméthylamino)éthoxyphosphine; le tris(N,N-diméthyl)phosphoramide, le tris(N,N-dicyclopentyl)phosphoramide, le tris(N,N-dibenzyl)phosphoramide, le tris(N,N-dieicosyl)phosphoramide, le tris(N,N-di-4,5-dipentyl-2-naphtyl)phosphoramide, le tris(N,N-diphényl)phosphoramide, le tris(N,N- diisobutyl)phosphoramide, le tris(N,N-di-3-

6

octylphényl) phosphoramide, le tris(N,N-di-2-phénylcyclohexyl)phosphoramide, le N,N-diméthyl-bis-(N′,N′-méthyl-N″-β-diméthylaminoéthyl) phosphoramide, l'octaméthylpyrophosphoramide et la 2-oxy-2- diméthylamino-1,3-diméthyl-1,3,2-diazophospholidine.

Parmi tous les dérivés d'oxydes d'organophosphines utilisables, on préfère les phosphoramides N-alkyl substituées, et particulièrement le tris(N,N-diméthyl)phosphoramide (ou hexaméthylphosphoramide).

Parmi tous les composés organiques électrodonneurs (3) décrits et énumérés ci-dessus, on a constaté que certains composés appartenant aux familles des composés organiques électrodonneurs contenant de l'azote et aux composés organiques électrodonneurs contenant du phosphore permettent d'obtenir, conjointement avec les solides (1) préactivés selon l'invention, des systèmes catalytiques de stéréospécificité considérablement augmentée combinée avec une activité catalytique qui est au moins celle obtenue, toutes autres conditions égales, en l'absence du composé (3). Ces composés (3) contenant de l'azote sont les amines et bases tertiaires, tout particulièrement la pyridine et ses dérivés et ces composés (3) contenant du phosphore sont les phosphites, tout particulièrement les phosphites d'alkyle, ainsi que les dérivés d'oxydes d'organophosphine, tout particulièrement l'hexaméthylphosphoramide qui conduit en outre à des polymères de distribution élargie des poids moléculaires.

Le solide (1) préactivé, le composé organométallique (2) et le composé organique électrodonneur (3) peuvent être ajoutés séparément et dans n'importe quel ordre au milieu de polymérisation (décrit ci-après).

On peut toutefois également effectuer un précontact du solide (1) avec le composé (2), du solide (1) avec le composé (3), du composé (2) avec le composé (3), ou encore des trois constituants entre eux avant de les introduire dans le milieu de polymérisation.

On peut, sans inconvénient, surtout lorsque l'on opère la polymérisation en continu, procéder à un précontact du composé (2) avec le composé (3), avant de les ajouter au solide (1), préalablement suspendu dans le diluant hydrocarboné ayant servi à le préparer ou préalablement introduit dans le milieu de polymérisation.

Ce précontact est généralement effectué à une température comprise entre -40 et 80°C, pendant une durée qui est dépendante de cette température et qui peut aller de quelques minutes à plusieurs heures, voire plusieurs jours.

Ce précontact peut s'effectuer en mettant le composé (2) et le composé (3) en solution dans un diluant hydrocarboné tel que ceux mentionnés plus haut ou en mettant en présence des solutions de ces composés dans pareil diluant; la formation d'un produit de réaction ou d'un complexe au cours de ce précontact entre les composés (2) et (3) n'est pas exclue et est généralement sans effet négatif sur les propriétés du système catalytique.

Les systèmes catalytiques comprenant les constituants (1), (2) et (3) définis et associés comme décrit ci-dessus, s'appliquent à la polymérisation des oléfines à insaturation terminale dont la molécule contient de 2 à 18 et de préférence de 2 à 6 atomes de carbone telles que l'éthylène, le propylène, le butène-1, le pentène-1, les méthylbutène-1, l'hexène-1, les 3- et 4-méthylpentènes-1 et le vinylcyclohexène. Ils sont particulièrement intéressants pour la polymérisation stéréospécifique du propylène, du butène-1 et du 4-méthylpentène-1 en polymères cristallins, fortement isotactiques. Ils s'appliquent également à la copolymérisation de ces alpha-oléfines entre elles ainsi qu'avec des dioléfines comprenant de 4 à 18 atomes de carbone. De préférence, les dioléfines sont des dioléfines aliphatiques non conjuguées telles que l'hexadiène-1,4, des dioléfines monocycliques non conjuguées telles que le 4-vinylcyclohexène, des dioléfines alicycliques ayant un pont endocyclique telles que le dicyclopentadiène, le méthylène- et l'éthylènenorbornène et des dioléfines aliphatiques conjuguées telles que le butadiène ou l'isoprène.

Ils s'appliquent encore à la fabrication de copolymères appelés à blocs qui sont constitués à partir d'alpha-oléfines et de dioléfines. Ces copolymères à blocs consistent en des successions de segments de chaîne à longueurs variables; chaque segment consiste en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Les systèmes catalytiques selon l'invention conviennent particulièrement bien pour la fabrication d'homopolymères du propylène et de copolymères contenant au total au moins 50 % en poids de propylène et de préférence 75 % en poids de propylène.

La polymérisation peut être effectuée selon n'importe quel procédé connu : en solution ou en suspension dans un solvant ou un diluant hydrocarboné inerte, tel que ceux définis en rapport avec la préparation du constituant (a) et qui est de préférence choisi parmi le butane, le pentane, l'hexane, l'heptane, le cyclohexane, le méthylcyclohexane ou leurs mélanges. On peut également opérer avantageusement la polymérisation dans le monomère ou un des monomères maintenu à l'état liquide ou encore en phase gazeuse.

La température de polymérisation est choisie généralement entre 20 et 200°C et de préférence entre 40 et 90°C, les meilleurs résultats étant obtenus entre 50 et 85°C. La pression est choisie généralement entre la pression atmosphérique et 50 atmosphères et de préférence entre 10 et 40 atmosphères. Cette pression est

EP 0 334 411 B1

bien entendu fonction de la température utilisée.

La polymérisation peut être effectuée en continu ou en discontinu.

La préparation des copolymères dits à blocs peut se faire également selon des procédés connus. On préfère utiliser un procédé en deux étapes consistant à polymériser une alpha- oléfine, généralement le propylène, selon la méthode décrite précédemment pour l'homopolymérisation. Ensuite, on polymérise l'autre alpha-oléfine et/ou dioléfine, généralement l'éthylène, en présence de la chaîne homopolymère encore active. Cette seconde polymérisation peut se faire après avoir enlevé complètement ou partiellement le monomère n'ayant pas réagi au cours de la première étape.

La quantité de solide (1) préactivé mise en oeuvre est déterminée en fonction de sa teneur en $TiCl_3$. Elle est choisie en général de manière que la concentration du milieu de polymérisation soit supérieure à 0,01 mmole de $TiCl_3$ par litre de diluant, de monomère liquide ou de volume de réacteur et de préférence supérieure à 0,05 mmole par litre.

La quantité totale de composé organométallique (2) mise en oeuvre n'est pas critique; elle est en général supérieure à 0,1 mmole par litre de diluant, de monomère liquide, ou de volume de réacteur, de préférence supérieure à 0,5 mmole par litre.

La quantité totale de composé organique électrodonneur (3) mise en oeuvre n'est pas davantage critique; on préfère toutefois ne pas mettre en oeuvre une quantité de composé (3) excédentaire par rapport à la quantité totale de composé (2).

Le rapport des quantités de composé (2) et de solide (1) n'est pas critique non plus. On choisit généralement ces quantités de manière que le rapport atomique entre le métal présent dans le composé (2) et le titane présent dans le solide (1) soit compris entre 0,5 et 20 atome-gramme/atome-gramme (at.g/at.g) et de préférence entre 1 et 15 at.g/at.g. Les meilleurs résultats sont obtenus lorsque ce rapport atomique est compris entre 2 at.g/at.g et 12 at.g/at.g.

Le rapport des quantités de composé (3) et de composé (2), exprimé en mole de composé (3) par mole de composé (2) est compris entre 0,001 et 5, de préférence entre 0,005 et 1. Les meilleurs résultats sont obtenus lorsque ce rapport est compris entre 0,01 et 0,5.

Le poids moléculaire des polymères fabriqués selon le procédé de l'invention peut être réglé par l'addition au milieu de polymérisation d'un ou plusieurs agents de réglage du poids moléculaire comme l'hydrogène, le diéthylzinc, les alcools, les éthers et les halogénures d'alkyle.

Les exemples suivants servent à illustrer l'invention.

La signification des symboles utilisés dans ces exemples, les unités exprimant les grandeurs mentionnées et les méthodes de mesure de ces grandeurs sont explicitées ci-dessous.

$\alpha$ =     activité catalytique exprimée conventionnellement en grammes de polymère insoluble dans le milieu de polymérisation, obtenus par heure et par gramme de $TiCl_3$ contenu dans le solide catalytique préactivé. Cette activité est appréciée indirectement à partir de la détermination de la teneur résiduaire en titane du polymère par fluorescence X.

fti =     fraction molaire de triades isotactiques (enchaînement séquencé de trois unités monomériques de propylène en configuration méso) du polymère total. Cette fraction est déterminée par RMN $^{13}$C comme décrit dans Macromolecules, volume 6, no. 6, page 925 (1973) et dans les références (3) à (9) de cette publication.

I.I =     indice d'isotacticié du polymère, apprécié par la fraction de ce dernier, exprimée en % par rapport à la quantité totale de polymère solide recueilli, qui est insoluble dans l'heptane bouillant.

$U_n = \dfrac{Mw}{Mn} - 1 =$     rapport du poids moléculaire moyen en poids Mw au poids moléculaire moyen en nombre Mn du polymère, diminué d'une unité ; la valeur de ce rapport est représentative de la distribution des poids moléculaires du polymère (des valeurs élevées correspondant à des distributions larges et vice-versa);

Mw et Mn et leur rapport sont déterminés à partir des données de fractionnement par chromatographie de perméation de gel d'une solution à 1 g/kg du polymère dans le 1.2.4-trichlorbenzène à 135°C (chromatographe Waters 200).

MFI = indice de fluidité en fondu mesuré sous une charge de 2,16 kg à 230°C et exprimé en g/10 min (norme ASTM D 1238).

PSA = poids spécifique apparent de la fraction du polymère insoluble, mesuré par tassement et exprimé en g/l.

8

EP 0 334 411 B1

Exemple 1 (de référence)

Cet exemple est donné à titre de comparaison.

A - Préparation du précurseur (solide à base de trichlorure de titane complexé)

1. Réduction

Dans un réacteur de 800 ml équipé d'un agitateur à 2 pales tournant à 400 tours/min., on introduit sous atmosphère d'azote 90 ml d'hexane sec et 60 ml de TiCl$_4$ pur. Cette solution hexane-TiCl$_4$ est refroidie à 0 ($\pm$ 1)°C. Endéans 4 h on y additionne une solution constituée de 190 ml d'hexane et de 70 ml de chlorure de diéthylaluminium (DEAC) en maintenant la température de 0 ($\pm$ 1)°C dans le réacteur.

Après addition de la solution DEAC-hexane, le milieu de réaction constitué par une suspension de fines particules est maintenu sous agitation à 1 ($\pm$ 1)°C pendant 15 min., puis est porté en 1 h à 25°C et maintenu 1 h à cette température et ensuite porté en 1 h environ à 65°C. Le milieu est maintenu sous agitation pendant 2 h à 65°C.

2. Prépolymérisation

La suspension obtenue est ensuite refroidie à environ 55°C. On introduit alors, dans le ciel gazeux du réacteur, du propylène sous une pression de 2 bars. Cette introduction est poursuivie pendant le temps suffisant (environ 45 minutes) pour obtenir, par kg de solide, 70 g de propylène polymérisé. La suspension du solide ainsi "prépolymérisé" est ensuite refroidie à 40°C.

La phase liquide est alors séparée du solide et le produit solide est lavé 7 fois au moyen de 200 ml d'hexane sec, avec remise en suspension du solide lors de chaque lavage.

3. Traitement avec l'agent complexant

Le solide réduit "prépolymérisé" obtenu est mis en suspension dans 456 ml de diluant (hexane) et on y ajoute 86 ml d'éther di-isoamylique (EDIA). La suspension est agitée pendant 1 h à 50°C. Ensuite, le solide ainsi traité est séparé de la phase liquide.

4. Traitement avec TiCl$_4$

Le solide traité est remis en suspension dans 210 ml d'hexane et on y ajoute 52 ml de TiCl$_4$; la suspension est maintenue sous agitation (150 tours/min.) à 70°C pendant 2 h. La phase liquide est ensuite éliminée par filtration et le solide (précurseur) base de trichlorure de titane complexé est lavé 14 fois avec 270 ml d'hexane.

B - Préactivation

Dans un réacteur de 800 ml équipé d'un agitateur à pales tournant à 150 tours/min., on introduit 74 g du précurseur solide (contenant environ 780 g de TiCl$_3$/kg) suspendu dans 280 ml d'hexane. On introduit lentement (30 minutes) dans ce réacteur 120 ml d'une solution dans l'hexane d'un préactivateur préalablement préparé en mélangeant, par litre d'hexane, 80 g de DEAC (composé (a)) et 176,2 g de 3-(3′,5′-di- tert-butyl-4-hydroxyphényl)propionate de n-octadécyle commercialisé sous la dénomination Irganox 1076 par CIBA-GEIGY (composé (b)). Le rapport molaire entre les composés (a) et (b) mis en oeuvre pour préparer le préactivateur est donc de 2, et le rapport molaire entre le préactivateur et le précurseur (exprimé en mole de composé (a) initialement mis en oeuvre par mole de TiCl$_3$ présent dans le précurseur) vaut 0,2.

La solution de préactivateur n'est introduite dans le réacteur que 15 minutes après le terme du dégagement gazeux observé au cours du mélange du composé (a) et du composé (b).

La suspension ainsi additionnée du préactivateur est maintenue pendant 1 heure à 30°C sous agitation.

Après décantation, le solide catalytique préactivé résultant est lavé 5 fois au moyen de 100 ml d'hexane sec, avec remise en suspension du solide lors de chaque lavage, puis séché par balayage d'azote en lit fluidisé à 50°C.

Le solide catalytique préactivé ainsi obtenu contient, par kg, 616 g de TiCl$_3$.

9

C - Polymérisation du propylène en suspension dans le monomère liquide en présence du solide catalytique préactivé

Dans un autoclave de 5 l, préalablement séché et maintenu sous atmosphère d'azote sec, on introduit, sous balayage d'azote :
– 400 mg de DEAC (sous forme d'une solution dans l'hexane à 200 g/l) commercialisé par la firme SCHERING (le rapport atomique Cl/Al est ajusté à 1,02 par addition de dichlorure d'éthylaluminium);
– 100 mg de solide catalytique préactivé (le rapport molaire entre le DEAC et le $TiCl_3$ présent dans le solide vaut ainsi environ 8);
– de l'hydrogène sous pression partielle de 1 bar;
– 3 l de propylène liquide.

On maintient le réacteur à 70°C sous agitation pendant 3 heures. Ensuite, on dégaze le propylène excédentaire et on récupère le polypropylène (PP) formé.

L'activité $\alpha$ du solide catalytique préactivé est 4312.

Le polypropylène obtenu présente les caractéristiques suivantes :

fti = 0,946
I.I = 96,6 %
$U_n$ = 7,6
MFI = 11,6 g/10 min.
PSA = 515 g/l

Exemples 2 à 9 (selon l'invention)

On procède à des essais de polymérisation dans les conditions générales décrites à l'exemple 1, partie C en présence du solide catalytique préactivé préparé comme décrit à l'exemple 1, parties A et B. La polymérisation est toutefois effectuée en la présence supplémentaire d'un composé organique électrodonneur (3) dont la nature, la quantité utilisée et le mode d'introduction sont mentionnés dans le Tableau ci-après et dans les remarques qui l'accompagnent.

Les résultats des essais de polymérisation sont aussi consignés dans le Tableau.

TABLEAU

| Exemple N° | 2 | 3 | 4 | 5 |
|---|---|---|---|---|
| Nature du composé organique électrodonneur (3) | méthacrylate de méthyle | p-toluate de méthyle | phtalate de diisobutyle | bis(2-méthoxy-éthyl)éther (diglyme) |
| | $H_2C=C-C$ $CH3$ $OCH_3$ (avec O) | $H_3C$ $O$ $C$ $OCH_3$ (avec O) | $O$ $C$ $O-iBu$ $C$ $O-iBu$ (avec O) | $CH_3-O-(CH_2)_2-O-(CH_2)_2-O-CH_3$ |
| Quantité de composé (3) (rapport molaire composé (3)/DEAC) | 0,02 | 0,02 | 0,02 | 0,05 |
| Mode d'introduction du composé | (a) | (a) | (b) | (a) |
| $\alpha$ (gPP/gTiCl$_3$ x h) | 4059 | 4312 | 4140 | 4404 |
| fti | 0,959 | 0,960 | 0,965 | 0,954 |
| I.I. (%) | 98,3 | 98,5 | 98,4 | 97,6 |
| $U_n$ | 7,5 | 7,5 | 6,7 | 8,0 |
| MFI (g/10 min.) | 8,4 | 9,4 | 9,9 | 6,2 |
| PSA (g/1) | 517 | 515 | 521 | 520 |

TABLEAU (suite)

| Exemple N° | 6 | 7 | 8 | 9 |
|---|---|---|---|---|
| Nature du composé organique électrodonneur (3) | diméthoxy-propane $H_3C-O-\underset{\underset{CH_3}{\overset{CH_3}{\mid}}}{C}-O-CH_3$ | 2,4,6-triméthyl-pyridine (collidine) | triéthyl-phosphite $P-(OC_2H_5)_3$ | hexaméthylphospho-triamide $[(CH_3)_2N]_3P=O$ |
| Quantité de composé (3) (rapport molaire composé (3)/DEAC) | 0,05 | 0,05 | 0,02 | 0,02 |
| Mode d'introduction du composé | (b) | (a) | (a) | (b) |
| $\alpha$ (gPP/gTiCl$_3$ x h) | 3906 | 4312 | 4500 | 4500 |
| fti | 0,955 | 0,967 | 0,965 | 0,959 |
| I.I. (%) | 98,3 | 98,2 | 98,5 | 96,8 |
| $U_n$ | 6,5 | 6,5 | 7,2 | 9,5 |
| MFI (g/10 min.) | 7,6 | 5,6 | 9,3 | 11,6 |
| PSA (g/l) | 518 | 519 | 529 | 522 |

12

Remarques

(a) introduction du DEAC et du composé (3) dans l'autoclave après 30 minutes de précontact à température ambiante.

(b) introductions successives du DEAC, du composé (3) et du solide catalytique préactivé, dans l'autoclave.

Ces résultats montrent clairement l'augmentation de la stéréospécificité des systèmes catalytiques selon l'invention (augmentation de la fti et du I.I.) sans modification significative de leur activité.

## Revendications

1. Procédé pour la polymérisation des alpha-oléfines effectué en présence d'un système catalytique comprenant :

(1) un solide à base de trichlorure de titane complexé;

(2) un composé organométallique de métaux des groupes IA, IIA, IIB et IIIB du Tableau Périodique,

(3) un composé organique électrodonneur, caractérisé en ce que le rapport molaire entre le composé électrodonneur (3) et le composé organométallique (2) est compris entre 0,005 et 1 et en ce que le solide (1) à base de trichlorure de titane complexé a été préactivé par mise en contact avec un préacti vateur comprenant le produit de la réaction d'un composé organoaluminique (a) et d'un composé (b) choisi parmi les composés hydroxyaromatiques dont le groupe hydroxyle est stériquement bloqué.

2. Procédé suivant la revendication 1, caractérisé en ce que le composé (a) est choisi parmi les trialkylaluminiums et les halogénures de dialkylaluminium.

3. Procédé suivant la revendication 1, caractérisé en ce que le composé (b) est choisi parmi les monophénols monocycliques di-tert-alkylés et les monoesters de l'acide 3-(3',5'-di-tert-butyl-4'-hydroxyphényl)propionique.

4. Procédé suivant les revendications 1 à 3, caractérisé en ce que le solide (1) a été préactivé par mise en contact du préactivateur avec un précurseur solide dont le constituant à base de trichlorure de titane complexé répond à la formule :

$$TiCl_3.(AlR\,Cl_2)_x.C_y$$

où R est un radical alkyle comprenant de 2 à 6 atomes de carbone, C est un agent complexant choisi parmi les éthers aliphatiques dont les radicaux aliphatiques comprennent de 2 à 8 atomes de carbone, x est un nombre quelconque inférieur à 0,20 et y est un nombre quelconque supérieur à 0,009.

5. Procédé suivant les revendications 1 à 4, caractérisé en ce que le composé électrodonneur (3) est choisi parmi les composés organiques comprenant au moins un atome ou groupement présentant au moins une paire d'électrons libres susceptible d'assurer la coordination avec le titane ou le métal du composé (2) et dont la molécule contient de 1 à 30 atomes de carbone par atome ou groupement électrodonneur.

6. Procédé suivant la revendication 5, caractérisé en ce que le composé (3) est choisi parmi les composés organiques contenant de l'oxygène, les composés organiques contenant de l'azote, les composé organiques contenant du phosphore et les composés organiques contenant du soufre.

7. Procédé suivant les revendications 5 et 6, caractérisé en ce que le composé (3) est choisi parmi les esters.

8. Procédé suivant les revendications 5 et 6, caractérisé en ce que le composé (3) est choisi parmi les éthers.

9. Procédé suivant les revendications 5 et 6, caractérisé en ce que le composé (3) est choisi parmi les amines.

10. Procédé suivant les revendications 5 et 6, caractérisé en ce que le composé (3) est choisi parmi les phosphites.

11. Procédé suivant les revendications 5 et 6, caractérisé en ce que le composé (3) est choisi parmi les dérivés d'oxydes d'organophosphines.

12. Procédé suivant les revendications 1 à 11, appliqué à la polymérisation du propylène.

13. Système catalytique, utilisable pour la polymérisation des alpha-oléfines, comprenant :

(1) un solide à base de trichlorure de titane complexé ;

(2) un composé organométallique de métaux des groupes IA, IIA, IIB et IIIB du Tableau Périodique,

(3) un composé organique électrodonneur, caractérisé en ce que le rapport molaire entre le composé électrodonneur (3) et le composé organométallique (2) est compris entre 0,005 et 1 et en ce que le solide (1) à base de trichlorure de titane complexé a été préactivé par mise en contact avec un préactivateur comprenant le produit de la réaction d'un composé organoaluminique (a) et d'un composé (b) choisi parmi les composés hydroxyaromatiques dont le groupe hydroxyle est stériquement bloqué.

EP 0 334 411 B1

**Patentansprüche**

1. Verfahren zur Polymerisation von Alpha-Olefinen, ausgeführt in Gegenwart eines katalytischen Systems, umfassend:

(1) einen festen Stoff auf der Basis von komplexiertem Titantrichlorid;

(2) eine organometallische Verbindung von Metallen der Gruppen IA, IIA, IIB und IIIB der Tabelle des Periodensystems;

(3) eine organische Elektronendonatoren-Verbindung, dadurch gekennzeichnet, daß das molare Verhältnis zwischen der Elektronendonatoren-Verbindung (3) und der organometallischen Verbindung (2) zwischen 0,005 und 1 beträgt, und daß der feste Stoff (1) auf der Basis von komplexiertem Titantrichlorid voraktiviert wurde durch Kontaktieren mit einem Voraktivator, umfassend das Reaktionsprodukt einer Organoaluminiumverbindung (a) und einer Verbindung (b), ausgewählt unter den hydroxyaromatischen Verbindungen, deren Hydroxylgruppe sterisch blockiert ist.

2. Verfahren nach Anspruch 1, dadurch gekennzeichnet, daß die Verbindung (a) ausgewählt ist unter Trialkylaluminium und den Halogeniden von Dialkylaluminium.

3. Verfahren nach Anspruch 1, dadurch gekennzeichnet, daß die Verbindung (b) ausgewählt ist unter den di-tert-alkylierten monozyklischen Monophenolen und den Monoestern der 3-(3′, 5′-di-tert-butyl-4′-hyxdoxyphenyl)propionsäure.

4. Verfahren nach den Ansprüche 1 bis 3, dadurch gekennzeichnet, daß der feste Stoff (1) voraktiviert wurde durch Kontaktieren des Voraktivators mit einem festen Vorläufer, dessen Bestandteil auf der Basis von komplexiertem Titantrichlorid der allgemeinen Formel:

$$TiCl_3.(AlR\,Cl_2)_x.C_y$$

entspricht, in der R ein Alkylrest mit 2 bis 6 Kohlenstoffatomen, C ein Komplexbildner, ausgewählt unter den aliphatischen Ethern, deren aliphatische Reste 2 bis 8 Kohlenstoffatome umfassen, x irgendeine Zahl kleiner als 0,20 und y irgendeine Zahl größer als 0,009 ist.

5. Verfahren nach den Ansprüchen 1 bis 4, dadurch gekennzeichnet, daß die Elektronendonatoren-Verbindung (3) ausgewählt ist unter den organischen Verbindungen, die wenigstens ein Atom oder eine Gruppierung umfassen, die wenigstens ein freies Elektronenpaar aufweisen, das die Koordination mit dem Titan oder dem Metall der Verbindung (2) gewährleistet und dessen Molekül 1 bis 30 Kohlenstoffatome pro Elektronendonatoren-Atom oder -Gruppierung enthält.

6. Verfahren nach Anspruch 5, dadurch gekennzeichnet, daß die Verbindung (3) ausgewählt ist unter den Sauerstoff enthaltenden organischen Verbindungen, den Stickstoff enthaltenden organischen Verbindungen, den Phosphor enthaltenden organischen Verbindungen und den Schwefel enthaltenden organischen Verbindungen.

7. Verfahren nach den Ansprüchen 5 und 6, dadurch gekennzeichnet, daß die Verbindung (3) ausgewählt ist unter den Estern.

8. Verfahren nach den Ansprüchen 5 und 6, dadurch gekennzeichnet, daß die Verbindung (3) ausgewählt ist unter den Ethern.

9. Verfahren nach den Ansprüchen 5 und 6, dadurch gekennzeichnet, daß die Verbindung (3) ausgewählt ist unter den Aminen.

10. Verfahren nach den Ansprüchen 5 und 6, dadurch gekennzeichnet, daß die Verbindung (3) ausgewählt ist unter den Phosphiten.

11. Verfahren nach den Ansprüchen 5 und 6, dadurch gekennzeichnet, daß die Verbindung (3) ausgewählt ist unter den Organophosphinoxyd-Derivaten.

12. Verfahren nach den Ansprüchen 1 bis 11, das für die Polymerisation von Propylen verwendet wird.

13. Katalytisches System, das für die Polymerisation von Alpha-Olefinen verwendet werden kann, umfassend:

(1) einen festen Stoff auf der Basis von komplexiertem Titantrichlorid;

(2) eine organometallische Verbindung von Metallen der Gruppen IA, IIA, IIB und IIIB der Tabelle des Periodensystems;

(3) eine organische Elektronendonatoren-Verbindung, dadurch gekennzeichnet, daß das molare Verhältnis zwischen der Elektronendonatoren-Verbindung (3) und der organometallischen Verbindung (2) zwischen 0,005 und 1 beträgt, und daß der feste Stoff (1) auf der Basis von komplexiertem Titantrichlorid voraktiviert wurde durch Kontaktieren mit einem Voraktivator, umfassend das Reaktionsprodukt einer Organoaluminiumverbindung (a) und einer Verbindung (b), ausgewählt unter den hydroxyaromatischen Verbindungen, deren Hydroxylgruppe sterisch blockiert ist.

**14**

## Claims

1. Process for the polymerisation of alpha-olefins, carried out in the presence of a catalyst system comprising:

(1) a solid based on complexed titanium trichloride;

(2) an organometallic compound of metals of groups IA, IIA, IIB and IIIB of the Periodic Table, and

(3) an electron-donor organic compound, characterised in that the molar ratio of the electron-donor compound (3) to the organometallic compound (2) is between 0.005 and 1 and in that the solid (1) based on complexed titanium trichloride has been preactivated by being brought into contact with a preactivator comprising the product of reaction of an organoaluminium compound (a) and of a compound (b) chosen from hydroxyaromatic compounds whose hydroxyl group is sterically hindered.

2. Process according to Claim 1, characterised in that the compound (a) is chosen from trialkylaluminiums and dialkylaluminium halides.

3. Process according to Claim 1, characterised in that the compound (b) is chosen from monocyclic di-tert-alkylated monophenols and monoesters of 3-(3′,5′-di-tert-butyl-4′-hydroxyphenyl)propionic acid.

4. Process according to Claims 1 to 3, characterised in that the solid (1) has been preactivated by bringing the preactivator into contact with a solid precursor whose constituent based on complexed titanium trichloride corresponds to the formula:

$$TiCl_3.(AlRCl_2)_x. C_y$$

where R is an alkyl radical containing from 2 to 6 carbon atoms, C is a complexing agent chosen from aliphatic ethers whose aliphatic radicals contain from 2 to 8 carbon atoms, x is any number smaller than 0.20 and y is any number greater than 0.009.

5. Process according to Claims 1 to 4, characterised in that the electron-donor compound (3) is chosen from organic compounds containing at least one atom or group which has at least one pair of free electrons capable of ensuring coordination with titanium or the metal of compound (2), and whose molecule contains from 1 to 30 carbon atoms per atom or electron-donor group.

6. Process according to Claim 5, characterised in that the compound (3) is chosen from organic compounds containing oxygen, organic compounds containing nitrogen, organic compounds containing phosphorus and organic compounds containing sulphur.

7. Process according to Claims 5 and 6, characterised in that the compound (3) is chosen from esters.

8. Process according to Claims 5 and 6, characterised in that the compound (3) is chosen from ethers.

9. Process according to Claims 5 and 6, characterised in that the compound (3) is chosen from amines.

10. Process according to Claims 5 and 6, characterised in that the compound (3) is chosen from phosphites.

11. Process according to Claims 5 and 6, characterised in that the compound (3) is chosen from organophosphine oxide derivatives.

12. Process according to Claims 1 to 11, applied to the polymerisation of propylene.

13. Catalyst system capable of being employed for the polymerisation of alpha-olefins, comprising:

(1) a solid based on complexed titanium trichloride;

(2) an organometallic compound of metals of groups IA, IIA, IIB and IIIB of the Periodic Table, and

(3) an electron-donor organic compound, characterised in that the molar ratio of the electron-donor compound (3) to the organometallic compound (2) is between 0.005 and 1 and in that the solid (1) based on complexed titanium trichloride has been preactivated by being brought into contact with a preactivator comprising the product of reaction of an organoaluminium compound (a) and of a compound (b) chosen from hydroxyaromatic compounds whose hydroxyl group is sterically hindered.